# EUROPÄISCHE PATENTSCHRIFT

(11) **EP 1 032 871 B1**
(45) Veröffentlichungstag und Bekanntmachung des Hinweises auf die Patenterteilung: **12.11.2003**
(21) Anmeldenummer: 98965590.7
(22) Anmeldetag: 26.11.1998
(51) Int. Cl.: G06F 9/445, G06F 9/46

(54) **VERFAHREN UND ANORDNUNG ZUM LADEN VON DATEN FÜR GRUNDLEGENDE SYSTEMROUTINEN EINES DATENVERARBEITUNGSSYSTEMS**
PROCESS AND DEVICE FOR LOADING DATA FOR BASIC SYSTEM ROUTINES OF A DATA PROCESSING SYSTEM
PROCEDE ET AGENCEMENT PERMETTANT DE CHARGER DES DONNEES DESTINEES AUX ROUTINES SYSTEME DE BASE D'UN SYSTEME DE TRAITEMENT DE DONNEES

(30) Priorität: 27.11.1997 DE 19752615
(43) Veröffentlichungstag der Anmeldung: 06.09.2000
(73) Patentinhaber: Fujitsu Siemens Computers GmbH, 81739 München (DE)
(72) Erfinder: MUNKER, Thomas, D-86633 Neuburg (DE); ALTMANN, Helmut, D-82110 Germering (DE); MICHEL, Uwe, D-86343 Königsbrunn (DE)
(74) Vertreter: Hermann, Uwe, Dipl.-Ing.
(86) Internationale Anmeldenummer: DE9803485
(87) Internationale Veröffentlichungsnummer: WO99028804

(56) Entgegenhaltungen:
- GB-A- 2 290 890
- US-A- 5 530 858

## Beschreibung

Die Erfindung bezieht sich auf ein Verfahren und eine Anordnung zum Laden von Daten für grundlegende systemroutinen eines Datenverarbeitungssystems.

Datenverarbeitungsanlagen, wie beispielsweise Personalcomputer, werden üblicherweise erst nach Laden eines Betriebssystems voll funktionsfähig. Auch ohne Betriebssystem benötigen die Datenverarbeitungsanlagen eine Grundfunktionalität, mit der elementare Operationen ausgeführt werden können. Solche elementaren Operationen sind beispielsweise Routinen für die Eingabe von Zeichen über die Tastatur sowie deren Ausgabe auf dem Bildschirm und dem Drucker, eine Routine für das Laden des Betriebssystems für den Arbeitsspeicher, sowie Prüfroutinen für einen automatisch ablaufenden Selbsttest beim Einschalten der Datenverarbeitungsanlage. Diese Operationen werden auch als grundlegende Systemroutinen bezeichnet. Die zum Ausführen dieser Systemroutinen erforderlichen Daten werden in einem nichtflüchtigen Speicherbaustein der Datenverarbeitungsanlage, beispielsweise PROM, EPROM, FLASH, etc., dauerhaft gespeichert. Man spricht dabei auch von einem BIOS (Basic Input Output System).

Aus der Druckschrift: c't 1997 Heft 2, Seiten 106 -110 ist es Bereits bekannt, beim Laden von BIOS-Daten geeignete Treiber- und Anwendungsprogramme aufzurufen.

Da die grundlegenden Systemroutinen die Arbeitsweise einer Datenverarbeitungsanlage wesentlich beeinflussen, ist es unter Umständen erforderlich, eine überarbeitete Version der grundlegenden Systemroutinen in der Datenverarbeitungsanlage einzusetzen. Dies kann durch einen Austausch des Speicherbausteins PROM erfolgen. Ist an Stelle eines nicht überschreibbaren PROMs ein überschreibbarer Speicherbaustein, beispielsweise EEPROM oder ein FLASH-Baustein in der Datenverarbeitungsanlage vorhanden, dann können die grundlegenden Systemroutinen in diesen Speicherbaustein geladen werden.

Zum Übertragen der Daten für die neuen grundlegenden Systemroutinen werden spezielle Programme verwendet, die mit herkömmlichen Betriebssystemen(Microsoft DOS) zusammenarbeiten. Beim Laden dieser gängigen Betriebsysteme wird eine Kopie der Daten aus dem nicht flüchtigen Speicher für grundlegende Systemroutinen im Arbeitsspeicher des Datenverarbeitungssystems abgelegt. Wird eine in den grundlegenden Systemroutinen definierte Funktionalität benötigt, wird auf diese Kopie im Arbeitsspeicher zurückgegriffen. Das Zusammenarbeiten mit der Kopie der grundlegenden Systemroutinen hat jedoch sicherheitstechnische Nachteile zur Folge, da die kopierten Daten vergleichsweise einfach durch Umgehen des Schreibschutzes verändert werden können. Bei neueren Betriebssystemen (IBM OS/2, Microsoft Windows 95 und Microsoft Windows NT) wird deshalb eine Lauffähigkeit angestrebt, die ohne Rückgriff auf eine Kopie der grundlegenden Systemroutinen im Arbeitsspeicher des Datenverarbeitungssystems möglich ist.

Aufgrund solcher Sicherheitsüberlegungen unterstützen die neueren Betriebsysteme das Laden einer neuen Version der grundlegenden Systemroutinen in den nicht flüchtigen Speicherbaustein nicht. Dem Benutzer stehen lediglich Programme einer Anwendungs-Schicht des Betriebsystems zur Verfügung. Auf Programme einer Kernel-Schicht des Betriebssystems, für die ein Zugriff auf für die Sicherheit wesentliche Funktionselemente der Datenverarbeitungsanlage erlaubt ist, hat der Benutzer keinen Zugriff. Das Datenverarbeitungssystem muß deshalb für das Laden einer neuen Version für grundlegende Systemroutinen stets neu gebootet, das heißt urgeladen werden. Diese Urladung muß dann mittels eines anderen Betriebssystems erfolgen, das zumindest das Laden der neuen Version der grundlegenden Systemroutinen unterstützt. Ist ein solches Betriebssystem geladen, können Sicherheitsmechanismen des eigentlich für den Betrieb der Datenverarbeitungsanlage vorgesehenen Betriebssystems nicht wirksam werden. Dadurch wird es möglich, daß auf innerhalb der Datenverarbeitungsanlage gespeicherte sonstige Daten zugegriffen werden kann. Diese Daten können auch in unzulässiger Weise durch sogenannte Viren so verändert werden, daß bei einem späteren regulären Betrieb Funktionsstörungen auftreten können.

Das Dokument GB-A-2 290 890 beschreibt ein BIOS-Update ohne Unterbrechung des Systems, wobei ein neues BIOS-Programm mittels dazugehöriger Dienstprogramme geladen wird. Zur sicheren Übertragung des BIOS-Programms wird ein Prüfsummentest für den Speicher durchgeführt, in den eine Schattenkopie geschrieben werden soll.

Der vorliegenden Erfindung liegt die Aufgabe zugrunde, ein Verfahren und eine Anordnung zum Laden von Daten für grundlegende Systemroutinen eines Datenverarbeitungssystems aufzuzeigen, das sicherheitstechnische Risiken beim Laden der Daten weitgehend ausschließt.

Diese Aufgabe wird durch die in den Patentansprüchen 1 bzw.6 angegebenen Merkmale gelöst. Vorteilhafte Weiterbildungen der Erfindung sind in Unteransprüchen angegeben.
Durch die Verwendung von zwei unterschiedlichen Programmen, dem Anwendungsprogramm und dem Treiberprogramm, die in der Anwendungs-Schicht bzw. in der Kernel-Schicht aufrufbar und lauffähig sind, kann die Datenverarbeitungsanlage während des Ladevorgangs unverändert mit seinem vorgesehenen, gegen Manipulation gesicherten Betriebssystem betrieben werden. Eine unzulässige Umgehung der Sicherheitstechniken dieses Betriebsystems ist damit ausgeschlossen. Ein unbefugtes Überschreiben der grundlegenden Systemroutinen wird damit wirksam verhindert. Eine Berechtigung zum Aufruf des Anwendungsprogramms kann beispielsweise solchen Benutzern zugeordnet werden, die auch Administratorrechte haben. Eine Verseuchung der Datenverarbeitungsanlage mit Viren kann nicht erfolgen, sofern das Betriebsystem dagegen geeignete Schutzmechanismen enthält.

Dem Datenverarbeitungssystem müssen lediglich die Daten der neuen Version der Daten für grundlegende Systemroutinen zur Verfügung gestellt werden. Diese werden vom Anwendungsprogramm an das Treiberprogramm übergeben. Das Treiberprogramm, auf das aus der Anwendungs-Schicht nicht zugegriffen werden kann, überträgt die Daten in den nicht flüchtigen Speicher.

Anhand eines Datenvergleichs kann sichergestellt werden, daß nur solche neuen Systemroutinen in den nicht flüchtigen Speicher der Datenverarbeitungsanlage geladen werden, die die Hardwarekomponenten der Datenverarbeitungsanlage auch verarbeiten können. Beispielsweise wird damit sichergestellt, daß der vorhandene Typ der Systemplatine (Motherboard) und der darauf angeordneten Speicherund Funktionsbausteine mit den in den neuen Daten geforderten Typen von Platinen und Bausteinen übereinstimmen. Es ist damit sichergestellt, daß die Datenverarbeitungsanlage nach dem Ladevorgang der grundlegenden Systemroutinen voll funktionsfähig ist.

Weiterhin ist vorgesehen,dass das Anwendungsprogramm aus der Datei mit den neuen Daten für grundlegende Systemroutinen sogenannte Ortsinformationen übernimmt. Auf der Grundlage dieser Ortsinformationen zerlegt das Anwendungsprogramm die neuen Daten in Pakete, die mit entsprechenden Ortsinformationen versehen an das Treiberprogramm übergeben werden. Durch diese portionsweise Übertragung der Daten wird die Arbeitsweise des Betriebssystems und anderer laufender Anwendungsprogramme des Datenverarbeitungssystems nur unwesentlich beeinträchtigt. Das Laden der neuen Daten der grundlegenden Systemroutinen kann somit auch während des regulären Betriebs der Datenverarbeitungsanlage erfolgen.

Die Portionsgröße kann dabei an die Parameter des nicht flüchtigen Speichers angepaßt werden. Das kleinste Paket entspricht der kleinsten Speichereinheit des nicht flüchtigen Speichers, und das größte Paket entspricht der Datenmenge, die innerhalb eines Ladevorgangs in den nicht flüchtigen Speicher übertragen werden kann. Bei gängigen nicht flüchtigen Speichern ist die kleinste Datenmenge 1 Byte und die größte Datenmenge 64 KByte.

Das Treiberprogramm ist auf die Bedürfnisse des nicht flüchtigen Speichers angepaßt. Die nicht flüchtigen Speicher, insbesondere die FLASH-Speicher, sind in der Regel sektorenweise organisiert, wobei innerhalb einzelner Speichersektoren bestimmte Adressbereiche beschreibbar sind. Der Löschvorgang kann jedoch stets nur für einen gesamten Sektor erfolgen. Liefert nun das Anwendungsprogramm die Information, wonach die übergebenen Daten für den Sektor i bestimmt sind und dort in die Adresse k bis k+n geschrieben werden sollen, dann stellt das Treiberprogramm zunächst fest, ob es in einem vorhergehenden Vorgang bereits diesen Sektor gelöscht hat. Ist dies der Fall, dann kann der Löschvorgang zum jetzigen Zeitpunkt entfallen und es müssen nur die Daten in die Adressen k bis k+n geschrieben werden. Ein gängiger Wert für n ist 1000, so daß bei jeder Übertragung der Daten von Anwenderprogramm zum Treiberprogramm ein KByte übertragen wird. Eine solche Datenmenge beeinträchtigt die Funktionsfähigkeit des Betriebssystems und der anderen laufenden Anwendungen nur äußerst gering. Alternativ kann auch das Anwendungsprogramm die oben beschriebene Funktionalität des Treiberprogramms übernehmen, wonach festzustellen ist, ob in einem vorhergehenden Vorgang ein Sektor bereits gelöscht worden war. In diesem Fall würde das Treiberprogramm lediglich den entsprechenden Anweisungen des Anwendungsprogramms folgen.

Gemäß einer weiteren Ausgestaltung und Weiterbildung der Erfindung kann das Anwendungsprogramm durch Remote-Zugriff gestartet werden - Anspruch 5. Durch diese Funktionalität kann ein Systemadministrator in einem Computernetzwerk im Rahmen eines Batchlaufs unter Verwendung eines Softwareverteilungstools auf einer Mehrzahl von Datenverarbeitungsanlagen neue grundlegende Systemroutinen im laufenden Betrieb installieren. Beim Aufruf des Anwendungsprogamms müssen vom Batch lediglich die erforderlichen Parameter, wie beispielsweise die Berechtigungsinformation und die neuen Daten übergeben werden.

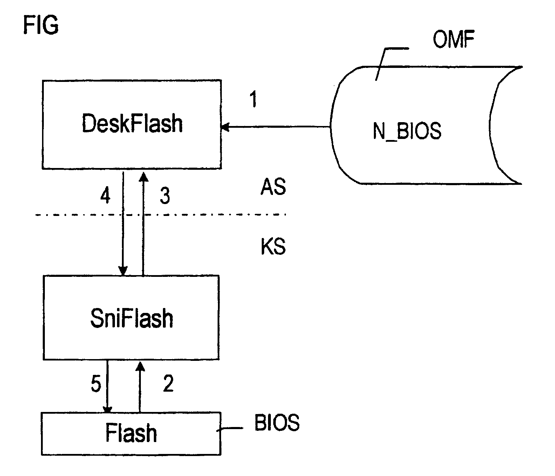

Im Folgenden wird ein Beispiel der Erfindung anhand der Figur näher erläutert. Die Figur zeigt ein Blockschaltbild, in dem die Anordnung der Komponenten und die Übertragungsrichtungen von Daten schematisch dargestellt sind. Grundlegende Systemroutinen werden nachfolgend als BIOS bezeichnet. In einem Datenverarbeitungssystem ist auf einer Systemplatine (nicht dargestellt) ein nicht flüchtiger Speicher, nachfolgend als Flash bezeichnet, angeordnet. Beim Flash handelt es sich um einen Speicherbaustein, dessen Speicher in Sektoren einer Größe von 64 KByte eingeteilt ist. Innerhalb der Sektoren können einzelne Byte adressiert und beschrieben werden. Ein Löschvorgang kann jeweils nur für einen gesamten Sektor durchgeführt werden.

Das Datenverarbeitungssystem kann mit Hilfe der im Flash gespeicherten BIOS ein Betriebssystem in seinen Arbeitsspeicher (nicht dargestellt) laden, wodurch es in einen betriebsfähigen Zustand versetzt wird. Das Betriebssystem verfügt über zwei hierarchische Schichten AS, KS, von denen ausgehend unterschiedliche Zugriffe auf das Datenverarbeitungssystem möglich sind. Aus einer Kernel-Schicht KS können darin angeordnete Programme auf Hardwareelemente der Datenverarbeitungsanlage zugreifen. In der Kernel-Schicht ist unter anderem ein Treiberprogramm SniFlash zugeordnet, das in der Lage ist, aus dem Flash Daten zu lesen, Daten zu löschen und Daten in den Flash zu schreiben. Der zweiten Schicht des Betriebssystems, der Anwendungs-Schicht AS, sind Anwendungsprogramme zugeordnet, die nicht auf die Sicherheit des Betriebssystems beeinträchtigende oder umgehende Teile des Datenverarbeitungssystems zugreifen dürfen. Ein Anwendungsprogramm, das in dieser Anwendungs-Schicht AS angeordnet ist, ist das Anwendungsprogramm DeskFlash, das für das Laden einer neuen Bios-Version N_BIOS vorgesehen ist. Über das Anwendungsprogramm DeskFlash und das Treiberprogramm SniFlash können Daten über die Schichtgrenzen zwischen Anwendungs-Schicht AS und Kernel-Schicht KS hinweg ausgetauscht werden.

Das Anwendungsprogramm DeskFlash kann durch Aufruf des Benutzers der Datenverarbeitungsanlage unmittelbar an dieser erfolgen. Alternativ dazu kann das Anwendungsprogramm DeskFlash durch einen Remote-Zugriff mit Hilfe eines Softwareverteilungstools gestartet werden. Mit Hilfe dieses Softwareverteilungstools kann von einem Systemadministrator, der über ein Netzwerk, das eine Mehrzahl von Datenverarbeitungsanlagen verbindet, an ausgewählte Datenverarbeitungsanlagen Parameter übermitteln, die einen Batchlauf auf den jeweiligen Datenverarbeitungsanlagen starten. Im Rahmen dieses Batchlaufs erfolgen dann die für das Starten des Anwendungsprogramms DeskFlash erforderlichen Parameterübergaben.

Beim Start des Anwendungsprogramms DeskFlash wird überprüft, ob der Benutzer, der diese Initialisierung des Anwendungsprogramms DeskFlash veranlaßt hat, zu der Benutzergruppe der Administratoren gehört. Nur die Gruppe der Administratoren ist berechtigt, das Anwendungsprogramms DeskFlash zu starten.

Liegt eine solche Berechtigung nicht vor und wurde sie auch nicht im Rahmen des alternativ möglichen Remote-Zugriffs anhand von Parametern nachgewiesen, wird die Ausführung des Anwendungsprogramms DeskFlash abgebrochen. Nichtberechtigten ist es damit nicht möglich, eine neue BIOS-Version N_BIOS in die Datenverarbeitungsanlage zu laden.

Konnte die erforderliche Berechtigung nachgewiesen werden, dann öffnet das Anwendungsprogramm DeskFlash zunächst eine Datei OMF, in der die neuen BIOS-Daten N_BIOS zur Verfügung gestellt sind. In der Datei OMF sind auch Informationen darüber verfügbar, für welche Datenverarbeitungsanlage mit welchen Systemplatinen und Funktionsbausteinen die vorliegende neue BIOS-Version N_BIOS geeignet ist. Diese Daten liest das Anwendungsprogramm DeskFlash auf dem in der Figur mit 1 bezeichneten Weg zunächst aus. Im zweiten Schritt fordert das Anwendungsprogramm DeskFlash auf einem mit 4 bezeichneten Weg das Treiberprogramm SniFlash auf, aus dem Flash die Daten bezüglich der Systemplatine und den darauf befindlichen Bausteinen, für das das bisherige BIOS verwendbar war, auszulesen. Dieser Vorgang wird über die mit 5 und 2 bezeichneten Wege vom Treiberprogramm SniFlash durchgeführt. Die ausgelesenen Daten überträgt das Treiberprogramm SniFlash auf dem mit 3 bezeichneten Weg zum Anwendungsprogramm DeskFlash. Die nun dem Anwendungsprogramm DeskFlash zur Verfügung stehenden Daten zur Systemplatine und den darauf befindlichen Funktionsbausteinen der bisher im Flash vorhandenen BIOS und den in der OMF-Datei verfügbaren neuen BIOS-Daten N_BIOS werden durch das Anwendungsprogramm DeskFlash verglichen. Bei vorliegender Identität kann die vorhandene BIOS-Version mit der neuen BIOS-Version N_BIOS überschrieben werden. Andernfalls wird dem Benutzer mitgeteilt, daß eine fehlende Übereinstimmung der alten BIOS und der neuen BIOS-Version N_BIOS vorliegt, und anschließend wird das Anwendungsprogramm DeskFlash beendet.

Das Anwendungsprogramm DeskFlash liest nun auf dem Weg 1 die Daten der Datei OMF und wertet diese nach vorgegebenen Regeln aus. Diese Regeln bestimmen, wie eine Header-Information zu interpretieren ist. Die Datei OMF enthält diese Header-Information, aus der ableitbar ist, welche Inhalte der Datei OMF an welche Stellen im Flash zu schreiben sind. Unter Berücksichtigung dieser Informationen nimmt das Anwendungsprogramm DeskFlash eine weitere Zerlegung in kleinere Pakete vor, die auch mit Ortsinformationen - in welchen Sektor des Flashs und an welche Adresse innerhalb dieses Sektors die Daten zu schreiben sind - enthalten können. Auf die Hinzufügung dieser Information zu den Paketen, die über den Weg 4 zum Treiberprogramm SniFlash übertragen werden, kann nur dann verzichtet werden, wenn sichergestellt ist, daß bei serieller Übertragung der Pakete kein Datenverlust auftreten kann.

Das erste Paket von Daten, die in einem bestimmten Sektor des Flash geschrieben werden sollen, enthält die Bezeichnung des Sektors und die Anfangsadresse ab der die Daten des vorliegenden Pakets und der nachfolgenden Pakete geschrieben werden müssen. Die Datenpakete haben eine Größe von 1 KByte, wodurch die Arbeit des Betriebssystems und darunter laufender anderer Anwendungsprogramme nur geringfügig beeinträchtigt wird.

Erhält das Treiberprogramm SniFlash über den Weg 4 ein Datenpaket, interpretiert es zunächst die ihm zugeordnete Ortsinformation. Ist keine Ortsinformation hinzugefügt, schreibt sie die Daten des Pakets über den Weg 5 im Anschluß an die vorher geschriebenen Daten in den entsprechenden Sektor des Flash. Ist eine Ortsinformation vorhanden, wird zunächst geprüft, ob der in der Ortsinformation bezeichnete Sektor des Flash bereits gelöscht ist und schon Daten aus vorangegangenen Paketen dort eingetragen sind. Ist dies der Fall, werden die Daten des aktuellen Pakets an die in der Ortsinformation bezeichneten Stellen, beispielsweise beginnend mit der Adresse k bis zur Adresse k+1000 geschrieben. Handelt es sich jedoch bei dem in der Ortsinformation bezeichneten Sektor des Flash um einen Sektor, der noch nicht gelöscht wurde und demnach noch Daten des alten BIOS enthält, dann veranlaßt das Treiberprogramm SniFlash das Löschen des entsprechenden Sektors des Flash. Erst danach schreibt es die Daten des Pakets an die in der Ortsinformation angegebenen Adressen.

Optional teilt das Treiberprogramm SniFlash dem Anwendungsprogramm DeskFlash über den Weg 3 mit, ob das Schreiben eines Datenpakets in den Flash erfolgreich vorgenommen werden konnte. Das Fehlen einer solchen Meldung oder das vorliegen einer entsprechenden Fehlermeldung veranlaßt das Anwendungsprogramm DeskFlash einen weiteren Versuch des Schreibens der Daten vorzunehmen, indem es entsprechende Datenpakete noch einmal über den Weg 4 zum Treiberprogramm SniFlash überträgt. Erst bei nochmaliger Fehlermeldung vom Treiberprogramm SniFlash werden weitere Maßnahmen wie Benutzerinformation, Zurückschreiben bereits gelöschter Daten in den Flash und Ähnliches veranlaßt.

Wurde der Ladevorgang für alle Sektoren des Flash erfolgreich abgeschlossen, dann wird der Benutzer vom Anwendungsprogramm DeskFlash aufgefordert, das Datenverarbeitungssystem neu zu booten. Folgt der Benutzer diesem Vorschlag nicht, kann die Datenverarbeitungsanlage bis zum nächsten Bootvorgang mit dem alten BIOS weiter betrieben werden.

Obwohl die vorliegende Erfindung anhand eines Beispiels in spezieller Form erläutert wurde, wird sie dadurch nicht eingeschränkt. Ähnliche Lösungen, die andere Ausführungsformen zur Folge haben, können vom Fachmann gefunden werden, ohne daß sie außerhalb des Schutzbereichs der vorliegenden Erfindung liegen.

## Patentansprüche

1. Verfahren zum Laden von Daten für grundlegende Systemroutinen (BIOS) eines Datenverarbeitungssystems in einen nicht flüchtigen Speicher (Flash), das mit einem Betriebssystem betrieben wird, das einen unmittelbaren Zugriff auf die Daten für grundlegende Systemroutinen (BIOS) des Datenverarbeitungssystems von Programmen aus seiner Kernel-Schicht (KS) zuläßt und einen entsprechenden Zugriff aus seiner Anwendungs-Schicht (AS)unterbindet, mit folgenden Schritten:
- Aufruf eines Anwendungsprogramms (DeskFlash) in der Anwendungs-Schicht,wobei das Laden von Informationen bezüglich der zugehörigen Hardware-Komponenten aus einer Datei (OMF) mit neuen Daten für grundlegende Systemroutinen (N_BIOS) in den Arbeitsspeicher des Datenverarbeitungssystems veranlaßt wird;
- Überprüfung beim Aufruf des Anwendungsprogramms, ob eine Berechtigung seitens des jeweiligen Benutzers vorliegt
- Aufruf eines Treiberprogramms (SniFlash) in der Kernel-Schicht (KS)durch das Anwendungsprogramm (DeskFlash),wobei das Treiberprogramm (SniFlash) zum Auslesen und Übertragen von Informationen bezüglich der vorhandenen Hardware-Komponenten aus dem nicht flüchtigen Speicher (FLASH) veranlaßt wird;
- Übergabe der Daten für grundlegende Systemroutinen (BIOS) und von Informationen zur Steuerung des Ladevorgangs dieser Daten in den nicht flüchtigen Speicher (FLASH), vom Anwendungsprogramm (DeskFlash) zum Treiberprogramm (SniFlash);
- Schreiben der Daten für grundlegende Systemroutinen (BIOS) in den nicht flüchtigen Speicher (FLASH).

2. Verfahren nach Anspruch 1, bei dem das Anwendungsprogramm (DeskFlash) einen Vergleich zur Feststellung der Zugehörigkeit der neuen Daten zur vorhandenen Hardware vornimmt und bei fehlender Übereinstimmung das Verfahren beendet.

3. Verfahren nach Anspruch 1 oder 2, bei dem das Anwendungsprogramm (DeskFlash)
- aus der Datei (OMF) mit den neuen Daten für grundlegende Systemroutinen (N_BIOS) Ortsinformationen entnimmt, wohin im nicht flüchtigen Speicher (FLASH) die neuen Daten zu schreiben sind;
- die neuen Daten für grundlegende Systemroutinen (N_BIOS) in Pakete zerlegt und mit einer entsprechenden Ortsinformation paketweise an das Treiberprogramm (SniFlash) übergibt.

4. Verfahren nach Anspruch 3, bei dem das Treiberprogramm (SniFlash) zunächst alte Daten aus einem Speicherbereich des nicht flüchtigen Speichers (FLASH) löscht, in den das erhaltene Datenpaket geschrieben werden soll und anschließend den gelöschten Bereich zumindest teilweise mit den neuen Daten beschreibt.

5. Verfahren nach einem der vorhergehenden Ansprüche, bei dem das Anwendungsprogramms (DeskFlash) durch Remote-Zugriff gestartet wird.

6. Anordnung zum Laden von Daten für grundlegende Systemroutinen (BIOS) eines Datenverarbeitungssystems in einen nicht flüchtigen Speicher (FLASH), das mit einem Betriebssystem betreibbar ist, das einen unmittelbaren Zugriff auf die Daten für grundlegende Systemroutinen (BIOS) des Datenverarbeitungssystems von Programmen aus seiner Kernel-Schicht (KS) zuläßt und einen entsprechenden Zugriff aus seiner Anwendungs-Schicht (AS) unterbindet, mit:
- einem in der Anwendungs-Schicht (AS) aufrufbaren Anwendungsprogramm (DeskFlash),welches das Laden von Informationen bezüglich der zugehörigen Hardware-Komponenten aus einer Datei (OMF) mit neuen Daten für grundlegende Systemroutinen (N_BIOS) in den Arbeitsspeicher des Datenverarbeitungssystems veranlaßt,
- einem in der Kernel-Schicht (KS) durch das Anwendungsprogramm (DeskFlash) aufrufbaren Treiberprogramm (SniFlash) zum Auslesen und Übertragen von Informationen bezüglich der vorhandenen Hardware-Komponenten aus dem nicht flüchtigen Speicher (FLASH),
- einer Koppelung des Anwendungsprogramms (DeskFlash) mit dem Treiberprogramm (SniFlash), so daß die Daten für grundlegende Systemroutinen (BIOS) und Informationen zur Steuerung des Ladevorgangs dieser Daten in den nicht flüchtigen Speicher (FLASH) übergeben werden können,
- einer Koppelung des Treiberprogramms (SniFlash) mit dem nicht flüchtigen Speicher (FLASH), so daß die Daten für grundlegende Systemroutinen (BIOS) in den nicht flüchtigen Speicher (FLASH) schreibbar sind.

## Claims

1. Method for loading data for basic system routines (BIOS) of a data processing system into a non-volatile memory (Flash), which is operated with an operating system which connects for direct access to the data for basic system routines (BIOS) of the data processing system by programs from its kernel layer (KS) and prevents corresponding access from its application layer (AS), having the following steps:
- calling of an application program (DeskFlash) in the application layer, thereby initiating the loading of information with regard to the associated hardware components from a file (OMF) with new data for basic system routines (N_BIOS) into the main memory of the data processing system
- checking, in the event of the application program being called, whether the respective user has authorization
- calling of a driver program (SniFlash) in the kernel layer (KS) by the application program (DeskFlash), the driver program (SniFlash) being prompted to read and transfer information with regard to the hardware components that are present from the non-volatile memory (FLASH);
- transfer of the data for basic system routines (BIOS) and of information for controlling the loading operation of these data into the non-volatile memory (FLASH), from the application program (DeskFlash) to the driver program (SniFlash);
- writing of the data for basic system routines (BIOS) to the non-volatile memory (FLASH).

2. Method according to Claim 1, in which the application program (DeskFlash) performs a comparison for ascertaining the association of the new data with respect to the hardware that is present, and ends the method in the absence of correspondence.

3. Method according to Claim 1 or 2, in which the application program (DeskFlash)
- takes from the file (OMF) with the new data for basic system routines (N_BIOS) location information regarding where in the non-volatile memory (FLASH) the new data are to be written;
- splits the new data for basic system routines (N_BIOS) into packets and transfers them with a corresponding location information item in packets to the driver program (SniFlash).

4. Method according to Claim 3, in which the driver program (SniFlash) firstly erases old data from a memory area of the non-volatile memory (FLASH) to which the received data packet is intended to be written, and then writes the new data at least partially to the erased area.

5. Method according to one of the preceding claims, in which the application program (DeskFlash) is started by remote access.

6. Arrangement for loading data for basic system routines (BIOS) of a data processing system into a non-volatile memory (FLASH), which can be operated with an operating system which connects for direct access to the data for basic system routines (BIOS) of the data processing system by programs from its kernel layer (KS) and prevents corresponding access from its application layer (AS), having:
- an application program (DeskFlash), which can be called in the application layer (AS) and initiates the loading of information with regard to the associated hardware components from a file (OMF) with new data for basic system routines (N_BIOS) into the main memory of the data processing system,
- a driver program (SniFlash), which can be called in the kernel layer (KS) by the application program (DeskFlash) and serves for reading and transferring information with regard to the hardware components that are present from the non-volatile memory (FLASH),
- a coupling of the application program (DeskFlash) to the driver program (SniFlash), such that it is possible to transfer the data for basic system routines (BIOS) and information for controlling the loading operation of these data into the non-volatile memory (FLASH),
- a coupling of the driver program (SniFlash) to the non-volatile memory (FLASH), such that the data for basic system routines (BIOS) can be written to the non-volatile memory (FLASH).

## Revendications

1. Procédé de chargement, dans une mémoire non volatile (flash), de données pour programmes de base (BIOS) d'un système de traitement de données qui est utilisé avec un système d'exploitation qui permet un accès direct aux données destinées aux programmes de base (BIOS) du système de traitement de données à partir de sa couche de noyau (KS) et qui empêche un accès correspondant à partir de sa couche d'application (AS), lequel procédé comprend les étapes suivantes :
- l'appel d'un programme d'application (DeskFlash dans la couche d'application, le chargement dans la mémoire de travail du système de traitement de données d'informations relatives aux composants matériels associés à partir d'un fichier (OMF) comportant de nouvelles données destinées à des programmes de base (N_BIOS) ;
- la vérification lors de l'appel du programme d'application si une autorisation existe du côté de l'utilisateur respectif ;
- l'appel d'un programme d'attaque (SniFlash) dans la couche de noyau (KS) via le programme d'application (DeskFlash), le programme d'attaque (SniFlash) étant amené à lire dans la mémoire non volatile (FLASH) et transférer de celle-ci des informations relatives aux composants matériels présents ;
- le transfert, du programme d'application (DeskFlash) au programme d'attaque (SniFlash), des données destinées aux programmes de base (BIOS) et d'informations de commande du processus de chargement de ces données dans la mémoire non volatile (FLASH) ;
- l'écriture, dans la mémoire non volatile (FLASH), des données destinées aux programmes de base (BIOS).

2. Procédé selon la revendication 1, dans lequel le programme d'application (DeskFlash) effectue une comparaison en vue de déterminer l'appartenance des nouvelles données au matériel présent et met fin au procédé en l'absence de concordance.

3. Procédé selon la revendication 1 ou 2, dans lequel le programme d'application (DeskFlash)
- va chercher dans le fichier (OMF) comportant les nouvelles données destinées aux programmes de base (N_BIOS) des informations locales selon lesquelles les nouvelles données doivent être écrites dans la mémoire non volatile (FLASH) ;
- fractionne les nouvelles données destinées aux programmes de base (N-BIOS) en paquets et les transfère par paquets avec une information locale correspondante au programme d'attaque (SniFlash).

4. Procédé selon la revendication 3, dans lequel le programme d'attaque (SniFlash) efface tout d'abord les anciennes données d'une zone de la mémoire non volatile (FLASH) dans laquelle le paquet de données obtenu doit être écrit, puis écrit au moins partiellement les nouvelles données dans la zone effacée.

5. Procédé selon l'une des revendications précédentes, dans lequel le programme d'application (DeskFlash) est démarré par un accès à distance.

6. Dispositif de chargement, dans une mémoire non volatile (FLASH), de données destinées à des programmes de base (BIOS) d'un système de traitement de données qui peut être exploité avec un système d'exploitation qui permet un accès direct aux données destinées aux programmes de base (BIOS) du système de traitement de données à partir de sa couche de noyau (KS) et qui empêche un accès correspondant à partir de sa couche d'application (AS), lequel dispositif comporte
- un programme d'application (DeskFlash) qui peut être appelé dans la couche d'application (AS) et qui effectue le chargement, dans la mémoire de travail du système de traitement de données, d'informations relatives aux composants matériels associés à partir d'un fichier (OMF) comportant de nouvelles données destinées à des programmes de base (N_BIOS) ;
- un programme d'attaque (SniFlash) qui peut être appelé dans la couche de noyau (KS) par le programme d'application (DeskFlash en vue de lire dans la mémoire non volatile (FLASH) et de transférer de celle-ci des informations relatives aux composants matériels présents ;
- un couplage du programme d'application (DeskFlash) au programme d'attaque (SniFlash) de façon à pouvoir transférer les données destinées aux programmes de base (BIOS) et des informations de commande du processus de chargement de ces données dans la mémoire non volatile (FLASH) ;
- un couplage du programme d'attaque (SniFlash) avec la mémoire non volatile (FLASH) de façon à pouvoir écrire des données destinées aux programmes de base (BIOS) dans la mémoire non volatile (FLASH).
